Europäisches Patentamt

European Patent Office

Office européen des brevets

(19)

(11) Numéro de publication : **0 522 910 A1**

(12) # DEMANDE DE BREVET EUROPEEN

(21) Numéro de dépôt : **92401752.8**

(22) Date de dépôt : **23.06.92**

(51) Int. Cl.$^5$ : **G02F 1/1335**

(30) Priorité : **09.07.91 FR 9108603**

(43) Date de publication de la demande :
**13.01.93 Bulletin 93/02**

(84) Etats contractants désignés :
**DE FR GB IT**

(71) Demandeur : **THOMSON-CSF**
**51, Esplanade du Général de Gaulle**
**F-92800 Puteaux (FR)**

(72) Inventeur : **Micheron, François**
**THOMSON-CSF, SCPI, Cédex 67**
**F-92045 Paris la Défense (FR)**
Inventeur : **Huignard, Jean-Pierre**
**THOMSON-CSF, SCPI, Cédex 67**
**F-92045 Paris la Défense (FR)**
Inventeur : **Lehureau, Jean-Claude**
**THOMSON-CSF, SCPI, Cédex 67**
**F-92045 Paris la Défense (FR)**

(74) Mandataire : **Guérin, Michel et al**
**THOMSON-CSF SCPI B.P. 329**
**F-92402 COURBEVOIE CEDEX (FR)**

(54) **Système de visualisation couleurs.**

(57)    L'invention concerne un système de visualisation comportant au moins deux valves optiques (trois selon la figure = $V_R$, $V_V$, $V_B$). A chaque valve est associé un élément luminophore ($F_R$, $F_V$, $F_B$) émettant chacun une lumière d'une longueur d'onde particulière lorsqu'il est éclairé a travers la valve par un faisceau (F1) d'une autre longueur d'onde déterminée.
     Applications : Visualisation couleurs.

FIG.3

L'invention concerne un système de visualisation couleurs.

Elle est applicable notamment aux systèmes de visualisations à valves électrooptique telles que les valves à cristaux liquides.

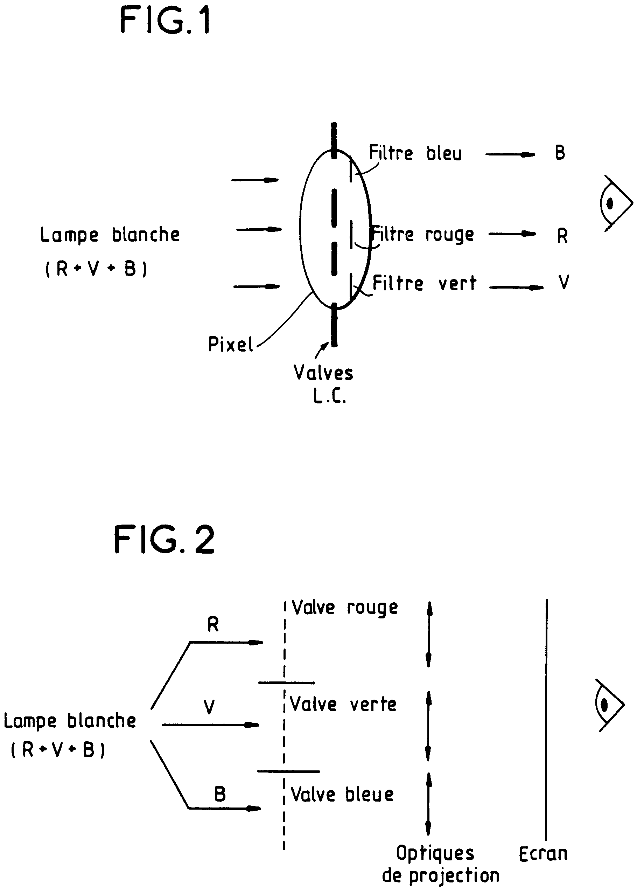

Les écrans de visualisation à cristaux liquides (LCD) utilisent des sources d'éclairage comportant les trois gammes de longueurs d'ondes rouge, vert et bleu (R.V.B.) correspondant aux trois primaires colorés de l'image. En vision directe (figure 1), le codage des couleurs se fait par des filtres colorés, chacun d'eux absorbant deux des primaires sur les trois. Le rendement optique associé à ce codage est d'environ 30 %. En projection (figure 2) la séparation des couleurs est effectuée par des miroirs dichroïques et l'essentiel des pertes optiques est dû au nombre élevé d'interfaces, ce qui conduit à un rendement global d'environ 60 %.

L'invention concerne un système permettant de palier cet inconvénient.

L'invention concerne donc un système de visualisation couleurs comprenant une source lumineuse émettant un faisceau lumineux d'une première longueur d'onde déterminée, au moins un ensemble de visualisation d'au moins une première et une deuxième valves optiques commandables recevant le faisceau lumineux et retransmettant chacune un faisceau modulé, caractérisé en ce qu'il comporte, associés respectivement à la première et à la deuxième valve optique, un premier et un deuxième éléments luminophores recevant le faisceau lumineux de la première longueur d'onde et transmettant en échange des faisceaux lumineux respectivement d'ne deuxième et d'une troisième longueurs d'ondes.

Les différents objets et caractéristiques de l'invention apparaîtront plus clairement dans la description qui va suivre et dans les figures annexées qui représentent :

- les figures 1 et 2, des dispositifs connus dans la technique et déjà décrits ;
- la figure 3, un exemple général de réalisation du dispositif selon l'invention ;
- les figures 4 et 5, des exemples de réalisation plus précis du dispositif selon l'invention ;
- la figure 6, un dispositif de l'invention appliqué à la projection ou la rétroprojection ;
- les figures 7 et 8, des dispositifs selon l'invention fonctionnant par additions de photons ;
- la figure 9, un exemple de réalisation détaillé du dispositif selon l'invention ;
- la figure 10, un dispositif de l'invention utilisant un séparateur trichrome.

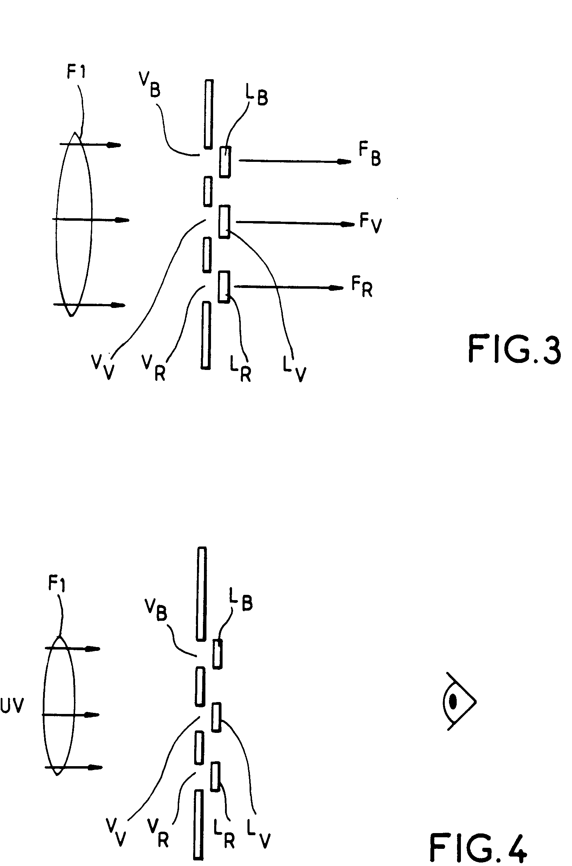

Selon l'exemple de réalisation générale représenté en figure 3, le dispositif de l'invention comporte au moins trois valves optiques $V_B$, $V_V$, $V_R$ trois valves optiques permettent de moduler chacune une partie d'un faisceau F1. A chaque valve optique est associé un élément luminophore $L_B$, $L_V$, $L_R$ recevant la partie de faisceau modulée par la valve associée. Le faisceau F1 transmis aux valves optiques possède une longue d'onde $\lambda_1$ comprise dans une gamme déterminée. Chaque élément luminophore $L_B$, $L_V$, $L_R$ est choisi de telle façon que, recevant une partie du faisceau F1 à la longueur d'onde $\lambda_1$, il émette un faisceau $F_B$, $F_V$, $F_R$ à une longueur d'onde caractéristique. Les trois luminophores $L_B$, $L_V$, $L_R$ sont rhoisis de façon à représenter les trois chrominances de base. C'est ainsi que le luminophore $L_B$ émet à une longueur d'onde $\lambda_B$ correspondant au bleu, le luminophore $L_V$ émet à une longueur d'onde $\lambda_V$ correspondant au vert et le luminophore $L_R$ émet à une longueur d'onde $\lambda_R$ correspondant au rouge.

L'association de trois valves et de trois éléments luminophores constitue un ensemble qui permet de réaliser ainsi un élément image d'affichage couleurs. Plusieurs ensembles ainsi conçus permet ainsi de visualiser une image en couleurs.

Chaque valve optique est commandée par un signal vidéo en vue de moduler une couleur déterminée. C'est ainsi que la valve $V_B$ est commandée par un signal vidéo correspondant au bleu, la valve $V_V$ par un signal vidéo correspondant au vert et la valve $V_R$ par un signal vidéo correspondant au rouge.

Selon un exemple de réalisation, ces valves sont commandés électriquement et les signaux vidéos sont des signaux électriques. Par exemple, ces valves peuvent être des valves à cristal liquide.

Selon un exemple de réalisation plus détaillé , le faisceau F1 possède une longueur d'onde comprise dans l'ultra-violet. La figure 4 représente un tel exemple de réalisation

Une source 5 d'éclairage ultraviolet émettant à une longueur d'onde à $\lambda = 147$ nm (Xenon) ou $\lambda = 253$ nm (mercure), c'est-à-dire celle utilisée en plasma couleur ou en éclairage fluorescent. Chaque valve $V_B$, $V_V$, $V_R$, module le faisceau 1, la première à l'aide d'un signal vidéo B, la seconde à l'aide d'un signal vidéo V et la troisième à l'aide d'un signal vidéo R. Chaque valve comporte, côté spectateur, un élément photoluminescent qui convertit le faisceau 1 en l'une des longeurs d'ondes primaires. L'avantage d'une telle disposition est double :

- il n'y a pas de pertes optiques par absorption comme dans le cas des filtres colorés ;
- le dispositif d'affichage possède un grand angle de vue, et présente les caractéristiques d'un écran émissif, du type plasma couleur et tube cathodique.

On notera qu'un tel principe peut être utilisé aussi bien en vision directe, (la matrice de photophores et disposée à l'avant de valves à cristaux liquides) qu'en projection (la matrice des photophores est disposée sur un écran après agrandissement des images).

Selon des variantes de réalisation selon l'invention le faisceau F1 n'est pas un faisceau UV mais un faisceau à l'une des trois longueurs d'ondes des faisceaux $F_B$, $F_V$, ou $F_R$. Cette disposition permet de s'affranchir des inconvénients éventuels liés à l'utilisation d'un rayonnement UV tels que :

- la transparence aux UV des valves optiques de leur substrat et les optiques ;
- les risques de dégradation des cristaux liquides par les UV ;
- la nécessité de propagation du rayonnement UV en atmosphère inerte (risque d'ionisation).

Selon une première variante la source S émet à une longueur d'onde comprise dans la gamme de longueur d'onde du bleu.

La source lumineuse S est donc une source bleue, de caractéristiques spectrales correspondant à la primaire B, c'est-à-dire centrée à environ $\lambda_B = 470$ nm. En supposant un rendement quantique de 1, le rendement de conversion de l'UV au bleu est

$$\eta_{OB} = \frac{\lambda_{uv}}{\lambda_B} = \frac{253}{470} = 54 \text{ \% (mercure)}$$

En pratique, le rendement quantique $\eta_q$ est compris entre 0,6 et 0,9 selon les photophores, de sorte que le rendement de conversion (interne UV vers le bleu est

$$0,3 < \eta_B < 0,48$$

En principe aussi, les conversions bleu-vert et bleu-rouge, s'effectuent avec des rendements égaux aux rapports de longueurs d'onde

$$\frac{\lambda_B}{\lambda_v}, \frac{\lambda_B}{\lambda_R}$$

Ces rendements doivent être pondérés par les rendements quantiques $\eta_{q'}$ ; $\eta_{q''}$ eux aussi compris entre 0,6 et 0,9.

Il en résulte que pour un blanc tel que blanc = 0,1 bleu + 0,7 vert + 0,2 rouge et $\lambda_v = 550$ nm, $\lambda_R = 620$ nm le rendement de conversion est, de l'UV au blanc (en double conversion) :

$$\eta = \eta_q \frac{\lambda_{uv}}{\lambda_B} \left[ 0,1 + 0,7 \; \eta_{q'} \; \frac{\lambda_B}{\lambda_v} + 0,2 \; \eta_q'' \; \frac{\lambda_B}{\lambda_R} \right]$$

Si le blanc avait été obtenu directement, sans passer par le bleu :

$$\eta_o = 0,1. \; \eta_{q'} \frac{\lambda_{uv}}{\lambda_B} + 0,7 \; \eta_{qo} \frac{\lambda_{uv}}{\lambda_v} + 0,2 \; \eta''_{qo} \frac{\lambda_{uv}}{\lambda_R}$$

En choisissant $\eta_q = \eta_{q'} = \eta_{q''} = \eta_{q'o} = \eta_{q'o} = 0.7$

On obtient : $\eta = 0,23$ et $\eta_o = 0,30$

Le rendement en double version, via un photophore bleu, est acceptable, bien qu'inférieur à celui d'une conversion simple.

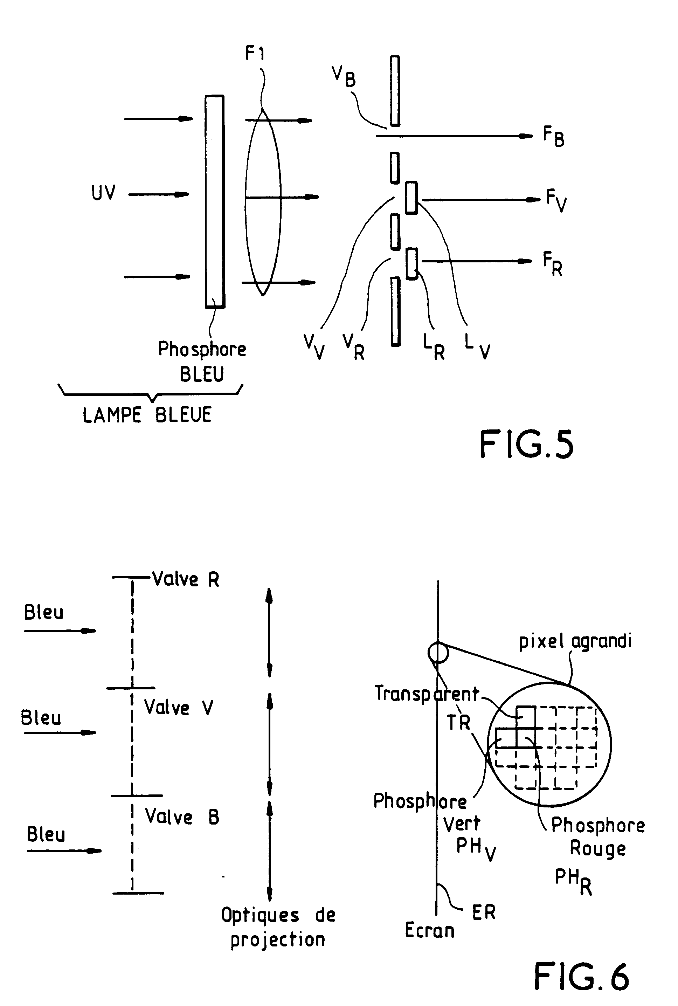

Le schéma d'un tel écran en vue directe est représenté sur la figure 5 : la valve "bleu" du pixel module le flux de la lampe bleue ; la valve rouge et la valve verte sont munies, en face avant, des photoluminescents qui effectuent la conversion bleue vers rouge et bleu vers vert. Il n'y a pas à craindre de dégradation du cristal liquide sous l'effet du rayonnement bleu, et les substrats du cristal liquide ne sont pas nécessairement du quartz.

En projection ou en rétroprojection, selon la figure 6, les trois images correspondant respectivement aux signaux vidéo rouge, vert, bleu, obtenues à partir d'une valve triple ou de 3 valves sont obtenues par modulation d'une source bleue. Ces trois images sont projetées sur l'écran du rétroprojecteur ER. Chaque pixel de l'écran comprend une zone transparente TR au bleu, une zone avec un phosphore rouge $PH_R$ et une zone avec une phosphore vert $PH_V$.

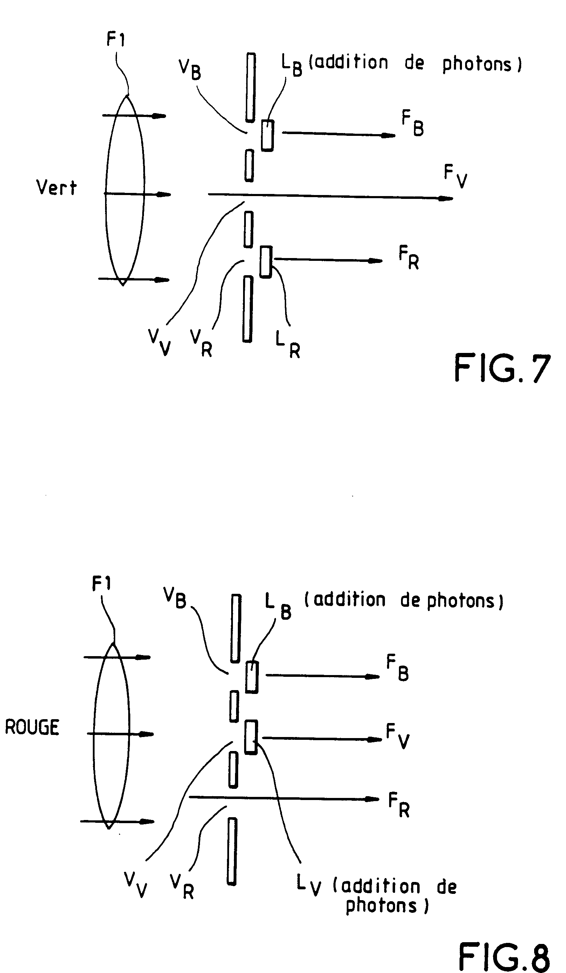

Selon une deuxième variante, la source monochromatique S peut être celle correspondant à la primaire verte (figure 7).

Les trois valves du pixel coloré sont telles que :

- la valve "verte" module le flux transmis, directement visible pour l'observateur ;
- la valve "rouge" est munie en face avant d'un photoluminescent qui effectue la conversion du vert vers le rouge ;
- la valve "bleue" est munie en face avant d'un phosphore particulier, effectuant la conversion du vert vers le bleu par le procédé dit d'addition de photons. En effet, l'énergie d'un photon bleu étant supérieure à celle d'un photon vert, il faut deux photons verts pour créer un photon bleu : la limite de conversion, c'est-à-dire l'obtention du rendement quantique unité se produit lorsque la longueur d'onde 'bleue" est moitié de la longueur d'onde "verte". Dans le cas de conversion 550 - - -> 470 nm, le rendement maximum de

conversion est:

$$\frac{1}{2} \cdot \frac{550}{470} = 58\,\%$$

Selon une troisième variante de réalisation,la source monochromatique S peut être celle correspondant à la primaire rouge (figure 8). Les trois valves du pixel coloré sont telles que :

- la valve "rouge" module le flux transmis, directement visible pour l'observateur ;
- les valves "verte" et "bleue" sont munies respectivement en face avant de phosphores à addition de photons, effectuant les conversion rouge-vert et rouge-bleu. Les rendements théoriques de ces conversions sont respectivement :

$$R \to V : \frac{1}{2}\frac{620}{550} = 56\,\%$$

$$R \to B : \frac{1}{2}\frac{620}{470} = 66\%$$

Ces deux variantes avec une source verte ou rouge sont applicables en vision directe comme en projection.

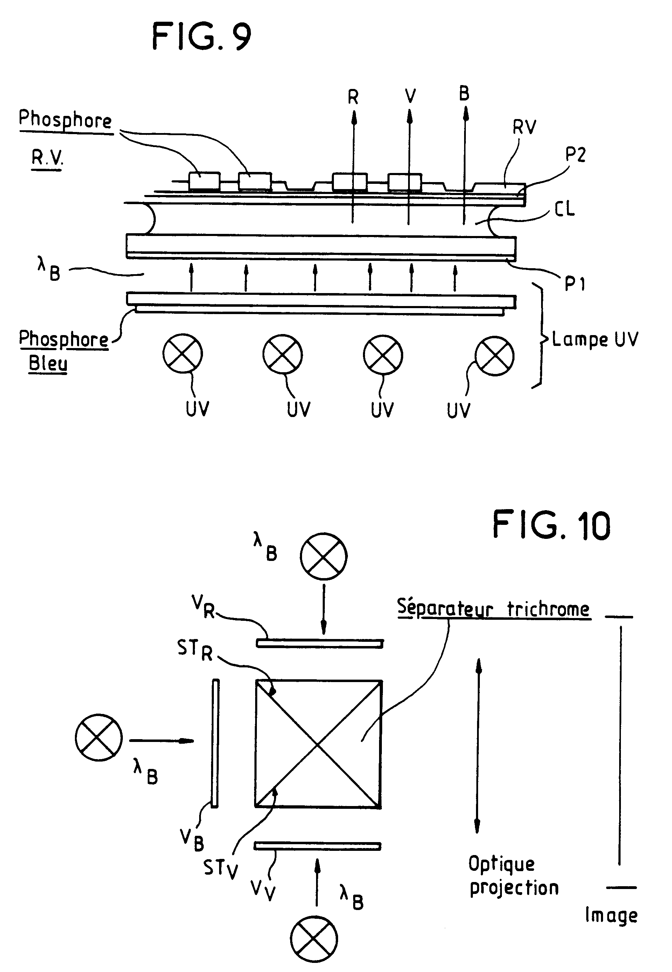

A titre d'exemple, de façon plus détaillée le dispositif peut comprendre comme cela est représenté en figure 9 :

- une lampe UV munie d'un phosphore pour l'émission dans le bleu ;
- un modulateur spatial de lumière CL, fonctionnant dans le bleu par effet électrooptique dans les cristaux liquides nématiques ;
- un écran RV muni de phosphores assurant la conversion de lumière bleu - rouge et bleu - vert.

Chaque élément image rouge et vert est placé en coïncidence avec une valve de modulation de lumière. Les phosphores rouges et verts sont ainsi mis en place des filtres colorés habituellement utilisés dans la technologie des écrans cristal liquide trichromes.

Le schéma de la figure 10 utilise trois valves monochromes $V_R$, $V_V$, $V_B$, les deux valves $V_V$ et $V_B$ étant munies d'un phosphore. La recombinaison des images dans une direction unique est obtenue par l'intermédiaire de séparateurs dichroïques SD.

Sur les figures 9 et 10 il est prévu en outre :

- des polariseurs $P_1$, $P_2$ pour la visualisation de la modulation spatiale de biréfringence dans la cellule cristal liquide.

Les séparateurs trichromes peuvent être réalisés à l'aide d'un cube constitué de prismes élémentaires comportant sur deux faces des traitements diélectriques appropriés du type basse bande et fonctionnant sous incidence 45°. Par exemple sur la figure 10 on a prévu que la face $ST_R$ a un coefficient maximum pour le rouge et la face $ST_V$ a un coefficient maximum pour le vert sans altération de la composante spectrale B. Ces composants existent commercialement.

Les matériaux luminophores utilisés selon l'invention peuvent être réalisés à l'aide de polymères (par exemple PMMA) dopés avec des colorants fluorescents qui réémettent la lumière absorbée avec un décalage spectral caractéristique du colorant utilisé comme celle est connu dans la technique.

A titre d'exemple, les matériaux luminophores utilisés pourront être :

$Y_2 0_2 S$ dopé europium pour le rouge

ZnCdS dopé cuivre pour le vert

ZnS dopé agent pour le bleu

ou encore :

$Y_20_3$ dopé europium pour le rouge

Ce $TbAl_2O_3$ dopé Mg pour le vert

$BaMg_2Al_{16}0_{27}$ dopé europium pour le bleu

## Revendications

1. Système de visualisation couleurs comprenant une source lumineuse émettant un faisceau lumineux d'une première longueur d'onde déterminée, au moins d'un ensemble de visualisation d'au moins une première et une deuxième valves optiques commandables recevant le faisceau lumineux et retransmettant chacune un faisceau modulé, caractérisé en ce qu'il comporte, associés respectivement à la première et à la deuxième valves optiques, un premier et un deuxième éléments luminophores recevant le faisceau lumineux de la première longueur d'onde et transmettant en échange des faisceaux lumineux respectivement d'une deuxième et d'une troisième longueurs d'ondes.

2. Système de visualisation selon la revendication 1, caractérisé en ce que l'ensemble de visualisation comporte trois valves optiques, l'élément luminophore associé à la première valve optique émettant dans une gamme de longueurs d'ondes correspondant sensiblement au rouge, l'élément luminophore associé à la deuxième valve optique émettant dans une gamme de longueurs d'ondes correspondant au bleu, l'élément luminophore associé à une troisième valve optique émettant dans une gamme de longueur d'ondes correspondant au vert.

3. Système de visualisation selon la revendication 1, caractérisé en ce que la première longueur d'onde est une longueur d'onde ultra-violette.

4. Système de visualisation selon la revendication 1, caractérisé en ce que la première longueur d'onde est égale à la deuxième longueur d'onde.

5. Système de visualisation selon la revendication 4, caractérisé en ce que la deuxième valve optique ne comporte pas d'élément luminophore associé.

6. Système de visualisation selon la revendication 4, caractérisé en ce qu'un dispositif changeur de fréquence reçoit le faisceau à la première longueur d'onde et émet un faisceau à la deuxième longueur d'onde.

7. Système de visualisation selon la revendication 1, caractérisé en ce que les valves optiques d'un ensemble sont juxtaposées et que les éléments luminophores sont également juxtaposés.

8. Système de visualisation selon la revendication 1, caractérisé en ce que le premier et le deuxième luminophores émettent des faisceaux lumineux dirigés selon une première et deuxième direction concourentes.

# FIG.1

Lampe blanche
(R + V + B)

Filtre bleu ⟶ B

Filtre rouge ⟶ R

Filtre vert ⟶ V

Pixel

Valves
L.C.

# FIG.2

Lampe blanche
(R + V + B)

R

V

B

Valve rouge

Valve verte

Valve bleue

Optiques
de projection

Ecran

FIG.3

FIG.4

FIG.5

FIG.6

FIG.7

FIG.8

# FIG. 9

Phosphore
R.V.

R    V    B

Phosphore    RV

P2

CL

$\lambda_B$

P1

Phosphore
Bleu

UV    UV    UV    UV

Lampe UV

# FIG. 10

$\lambda_B$

$V_R$

$ST_R$

Séparateur trichrome

$\lambda_B$

$V_B$

$ST_V$    $V_V$

$\lambda_B$

Optique
projection

Image

Office européen
des brevets

**RAPPORT DE RECHERCHE EUROPEENNE**

Numero de la demande

EP 92 40 1752

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | PATENT ABSTRACTS OF JAPAN vol. 12, no. 46 (P-665)(2893) 12 Février 1988 & JP-A-62 194 227 ( MATSUSHITA ELECTRIC IND CO LTD ) 26 Août 1987 | 1-3 | G02F1/1335 |
| A | * abrégé * | 4-8 | |
| | --- | | |
| X | GB-A-2 154 355 (RICOH CO LTD) | 1-3 | |
| A | * page 1, ligne 25 - page 2, ligne 5; figures 2,19 * | 4-8 | |
| | --- | | |
| A | FR-A-2 600 451 (MORIN ET AL.) * revendication 1; figures 1-4 * | 1-8 | |
| | ----- | | |

**DOMAINES TECHNIQUES RECHERCHES (Int. Cl.5 )**

G02F
H04N

Le présent rapport a été établi pour toutes les revendications

| Lieu de la recherche | Date d'achèvement de la recherche | Examinateur |
|---|---|---|
| LA HAYE | 08 OCTOBRE 1992 | GRUNFELD M.Y. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)